# EUROPEAN PATENT APPLICATION

(11) **EP 1 865 452 A1**
(43) Date of publication of application: **12.12.2007**
(21) Application number: 07251946.5
(22) Date of filing: 11.05.2007
(51) Int. Cl.: G06Q 10/00, H04L 29/12

(54) **Managing of items distributed in a global supply chain**

(30) Priority: 07.06.2006 US 422603
(71) Applicant: Hewlett-Packard Development Company, L.P., Houston, TX 77070 (US)
(72) Inventor: Vennelakanti, Ravigopal, Palo Alto, California 94304-100 (US); Rhoto, John, Wien 1120 (AT)
(74) Representative: Exell, Jonathan Mark

(57) **Abstract**

A method for managing items distributed in a global supply chain is provided. The method includes sending an identification query to an identification tag attached to an item, receiving identification data from the identification tag, determining a home address corresponding to the identification data, assigning a current address for the identification tag, sending the current address to a home agent at the determined home address, and associating the current address with the home address by the home agent. Accordingly the current address of the identification tag is returned in response to a request on the location of the identification tag.

## Description

### Field of the Invention

This invention relates generally to a global supply chain, and in particular, to a method for managing items distributed in a global supply chain.

### Background of the Invention

A supply chain is a coordinated system of entities, units or partners involved in moving or distributing a product from one unit to another. A typical example is the distribution of a product from manufacturers to distributors, and finally to retail outlets. Much attention has been given to improve supply chain visibility.

In particular, the Radio Frequency Identification (RFID) technology has been widely used to track the movement of products. A RFID tag containing a unique code is attached to each of the products to be moved along the supply chain, and a corresponding RFID reader installed at each unit of the supply chain reads the codes of the RFID tags. The advantage of using RFID is that the reading of the codes of the RFID tags is done using RF waves, and hence, the products need not be in the line of sight of the reader. In addition, more than one RFID tags can be read simultaneously by the reader. Therefore, the use of RFID technology in supply chain enables companies to optimize their business processes and minimize inventories since the products and its availability can be tracked efficiently.

Most logistic operations are currently confined to an individual company or dedicated partner operations which focus primarily on intranet or extranet connectivity. With increased globalization of businesses, there is a need to expand the supply chain from the logistics operation of an individual company to a global supply chain model which spans many countries. However, the sheer volume of required information, combined with the need for immediate data, makes the supporting and maintaining a single all-encompassing repository of a global supply chain almost an impossible task.

Furthermore, the challenge in supporting such a global supply chain model includes fulfilling the requirement for direct and immediate end-to-end connectivity from the partners of the global supply chain on a particular product. In order to facilitate global accessibility of the product, each unique product identity of a product needs to correspond to an appropriate Internet Protocol (IP) address which has to be universally addressable and globally unique.

Accordingly, it is desirable to have a system that can overcome the above-mentioned challenges and manages the products distributed in the global supply chain efficiently.

### Summary of the Invention

According to an embodiment, a method for managing items distributed in a global supply chain is provided. The method includes sending an identification query to an identification tag attached to an item, receiving identification data from the identification tag, determining a home address corresponding to the identification data, assigning a current address for the identification tag, sending the current address to a home agent at the determined home address, and associating the current address with the home address by the home agent. Accordingly the current address of the identification tag is returned in response to a request on the location of the identification tag.

### Brief Description of the Drawings

The embodiments of the invention will be better understood in view of the following drawings and the detailed description.

Figure 1 shows an example of a global supply chain according to an embodiment.

Figure 2 shows an example of an entity of the global supply chain according to an embodiment.

Figure 3 shows the two-stage mapping of the identification code of a product to its current address according to an embodiment.

Figure 4 shows the structure of an Electronic Product Code (EPC) and an Internet Protocol version 6 (IPv6) address format.

Figure 5 shows an example of the global supply chain with a distributor hosting a home agent.

Figure 6 shows a flow-chart of a process for updating a current address of a product in the global supply chain according to an embodiment.

Figure 7 shows a flow-chart of a process for obtaining the location of a product in the global supply chain according to an embodiment.

### Detailed Description of the Invention

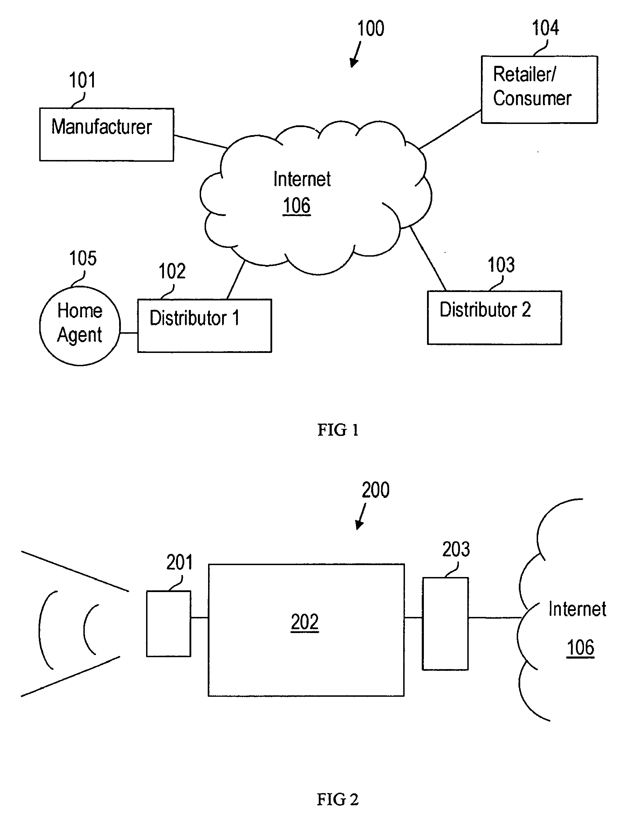

Figure 1 shows an example of a global supply chain 100 according to an embodiment. The global supply chain 100 includes a manufacturer 101, a first distributor 102 (Distributor 1), a second distributor 103 (Distributor 2), a retailer or consumer 104 and a home agent 105. The home agent 105 is connected to the first distributor 102. The manufacturer 101, the first distributor 102, the second distributor 103 and the retailer 104 are interconnected via the Internet 106.

The global supply chain 100 is a logistic network which is a coordinated system of entities or units involved in moving a product from suppliers to customers. In the example of Fig. 1, the product is manufactured by the manufacturer 101. The finished product may be transported directly to the retailer 104 to be sold to customers at retail shops. Alternatively, the product may be transported first to the first distributor 102 and/or the second distributor 103 before being transported to the retailer 104. The transportation of the products between the entities of the global supply chain 100 may be by any known modes of transportation such as aircrafts, ships and cars. The home agent 105 coordinates and maintains a database of current Internet Protocol (IP) addresses of each product.

It should be noted that the global supply chain 100 illustrated in Fig.1 is only an example. The global supply chain 100 may include any numbers of manufacturers 101, distributors 102, 103, retailers 104, home agents 105, and other types of entities which are not shown in Fig.1.

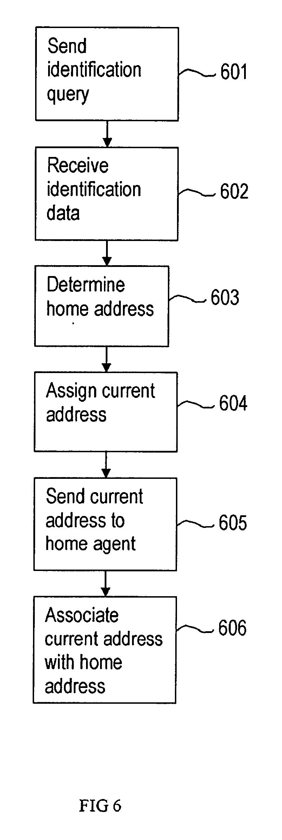

Each product in the global supply chain 100 is affixed with an identification tag. The identification tag contains an identification code which uniquely identifies the product. Each entity of the global supply chain 100 includes a reader which reads the identification code of each identification tag of the product when the product is at one of the entities. A current IP address of the product is communicated to the home agent 105. The process involved in generating the current IP address of the product and the sending the IP address to the home agent 105 will be described in greater details with reference to Fig.6 at a later part of the description.

In an embodiment, a Radio Frequency Identification (RFID) tag is used as the identification tag, and a RFID reader is used to query the identification code from the RFID tag. It is also possible to use other forms of identification tag and reader, such as a barcode and a barcode scanner in other embodiments.

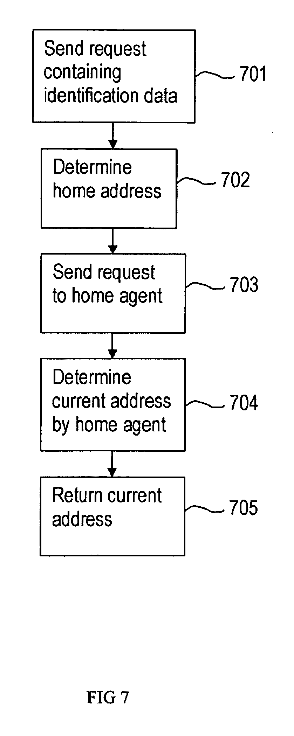

As can be seen from Fig. 1, the home agent 105 is connected to the first distributor 102 which is in turn connected to the other entities 101, 103, 104 via the Internet 106, Therefore, any authorized user may access the Internet 106 to query the current IP address of a product to determine the location of the product in the global supply chain 100. The process of determining the location of the product in the global supply chain 100 will be described in greater details with reference to Fig. 7 at a later part of the description.

Fig.2 shows an example of an entity 200 of the global supply chain 100 according to an embodiment. The entity 200 includes a reader 201, a middleware 202 and a network interface 203. The reader 201 reads identification codes received from the identification tags and passes the identification codes to the middleware 202. The reader 201 may also pass other information such as the time and date of each identification code being received to the middleware 202. The middleware 202 processes the information received from the reader 201 and communicates to the other entities of the global supply system 100 via the Internet 106. The network interface 203 provides the interface between the middleware 202 and the Internet 106.

In an embodiment, the reader 201 is a RFID reader which sends out a RF query signal to activate any RFID tags in the proximity. The RFID tags respond to the query signal by broadcasting their respective RFID identification codes which are subsequently received by the reader 201.

The middleware 202 exposes services for managing data from the reader 201, communicating with other available services and exchanging information with other entities of the global supply chain 100. Specifically, the middleware 202 assigns the current addresses of the identification tags read by the reader 201, and overloads the network interface 203 with the current addresses of the identification tags. The middleware 202 also issues binding updates so that any subsequent communications or traffic intended for the identification tags at the entity 200 are routed to the network interface 203 directly.

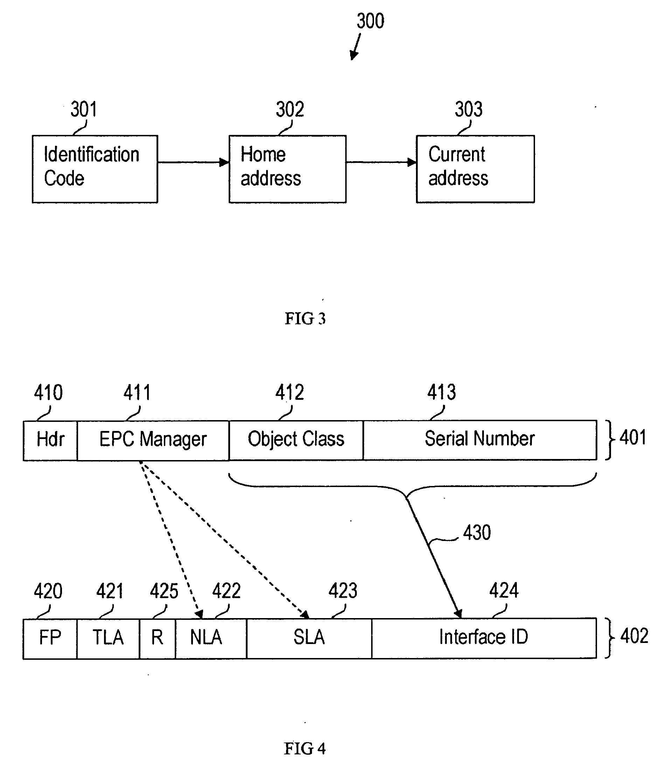

The determining of the current address of a product from its identification code is a 2-stage mapping process. Fig.3 shows the 2-stage mapping of the identification code of a product to its current address according to an embodiment. The first stage is a mapping of the identification code 301 of an identification tag to a home address 302. The second stage is a mapping of the home address 302 to its current address 303.

The first stage is performed by looking up a database or table which maps each identification code to a unique home address. The database for the first step mapping is generated by an entity of the global supply chain 100 which hosts a home agent, and is replicated in all the subsequent entities of the global supply chain 100. The home address of each identification code is exposed at the network interface of the entity which hosts the home agent. The second stage is performed by looking up a database or table which maps each home address to its current address. The current addresses assigned to the identification tags at the other entities are sent to the home agent, and the home agent maintains the home address mapping database for the second stage mapping. The mapping of the identification code of a product to its home address shall be illustrated using an example of the Electronic Product Code (EPC) and the Internet Protocol version 6 (IPv6).

Fig.4 shows the structure of the EPC 401 and the IPv6 address format 402, and an example of a mapping of the EPC 401 to the IPv6 address format 402 according to an embodiment. The EPC 401 is a 96-bit code and includes a header 410, an EPC Manager 411, an Object Class 412 and a Serial Number 413. 8 bits are allocated for the header 410, 28 bits for the EPC Manager 411, 24 bits for the Object Class and 36 bits for the Serial Number 413. The Object Class 412 and the Serial Number 413 may be grouped and referred to as a product identifier.

The address format of the IPv6 402 is 128 bit and includes a Format Prefix (FP) 420, a Top-Level Aggregator (TLA) 421, a Next-Level Aggregator (NLA) 422, a Site-Level Aggregator (SLA) 423 and an Interface Identifier 424. 3 bits are allocated for the FP 420, 13 bits for the TLA 421, 24 bits for the NLA 422, 16 bits for the SLA 423 and 64 bits for the Interface Identifier 424. There is also an 8-bit block 425 reserved for future use. The FP 420, TLA 421, NLA 422, SLA 423 and the reserved block 425 may be grouped and referred to as a high-order 64-bit prefix, and the Interface Identifier 424 may be referred to as the low-order 64-bits host portion.

Since the IPv6 address format 402 (128 bits) is 32 bits larger than the EPC 401 (96 bits), there is no theoretical scalability constraint in mapping the entire EPC 401 to the IPv6 address format 402. A possible way of mapping the EPC 401 to the IPv6 address format 402 is to map the EPC Manager 411 to the high-order 64 bits prefix, and the product identifier 412, 413 to the Interface Identifier 424. The mapping of the product identifier 412, 413 of the EPC 401 to the Interface Identifier 424 of the IPv6 address 402 would be straightforward since the size of the product identifier 412, 413 is 60 bits and the size of the Interface Identifier 424 is 64 bits. However, the mapping of the EPC Manager 411 to the high-order 64 bits prefix could not be algorithmically derived. Therefore, at least a database of the mapping of the EPC Manager 411 of the EPC 401 to the high-order 64 bits prefix of the IPv6 address 402 needs to be maintained and replicated at every entities of the global supply system 100.

It should be noted that the mapping of the EPC 401 to the IPv6 address format 402 described above is only an example. It is possible to map any portions of the EPC 401 to any corresponding portions of the IPv6 address format 402 in other embodiments. In any case, a full database of the mapping of the full 96-bit EPC 401 to the IPv6 address 402 may also be maintained and replicated at all the entities of the global supply system 100 for completeness sake.

The mapping of the EPC 401 to the IPv6 home address is defined by a first entity of the global supply chain 100 which host the home agent 105. This may be the manufacturer 101, or a company which affix the identification tag to the product. It is also possible that the first entity which hosts the home agent 105 to be any entity which iss further down the global supply chain 100.

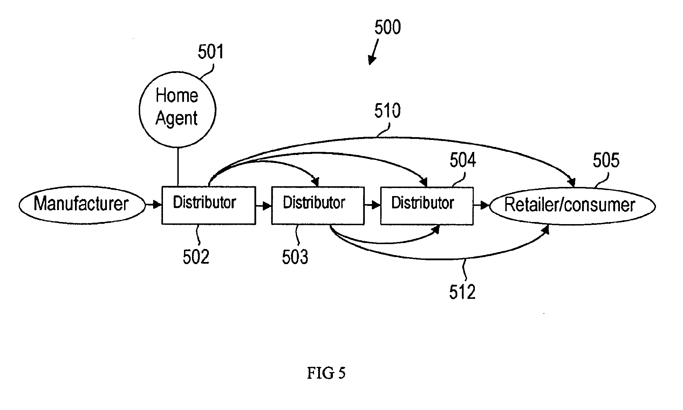

Fig.5 shows an example of the global supply chain 500 where the first entity to host a home agent 501 is a distributor 502. The distributor 502 is referred to as a Home Address owner and is responsible for sending the identification code mapping database to all subsequent entities (distributors 503, 504 and retailer 505) in the global supply chain 500 as shown by the arrows 510. Therefore, all the entities in the global supply chain 500 would have a replicated database of the identification code mapping database, for example, mapping the EPC to the IPv6 home addresses.

It should be noted that it is sufficient that the mapping database is propagated from the distributor 502 to the subsequent entities 503, 504, 505. However, for the sake of redundancy and to accommodate routing changes, the subsequent entities 503, 504, 505 may confirm the EPC to IPv6 home address mapping with their subsequent entities in an alternative embodiment. For example, the distributor 503 may confirm with the distributor 504 and the retailer 505 the identification code to IPv6 home address mapping as shown by arrows 512.

It is also possible that more than one entities of the global supply chain 500 create and communicate distinct identification code to home address mappings to other entities. The creation of such distinct mappings may be due to a deliberate requirement to restrict global visibility of a portion of the global supply chain 500. Accordingly, a single identification code of a product may have multiple entries in some of the mapping databases, and the corresponding home addresses may resolve to the same or different current addresses. The most recent information of the current address may be taken to be the correct current address of the product.

The mapping of the home address of the identification tag to its current address shall now be described using the example of Mobile IPv6 which uses a Mobile IPv6 Home Agent as an example. According to the Mobile IPv6, it is assumed that a mobile node is originally attached to a home network which hosts the home agent. When the mobile node leaves the home network and attaches to a foreign node, the mobile node communicates its new address, known as the Care-of-Address, to the home agent.

Consequently, all communications or traffic in the form of data packets from a correspondent node to the mobile node are first sent to the home address of the mobile node. The home agent at the home address intercepts these packets and routes them to the mobile node at its Care-of-Address. The mobile node then sends a Binding Update to the correspondent node to request direct communication for subsequent communications between the correspondent node and the mobile node.

In the context of the global supply chain 500, the mobile node is synonymous to the identification tag attached to the product, and the home network, the foreign node and the correspondent node are the entities of the global supply chain 500. The Care-of-Address is the current address of the identification tag at one of the entities.

Fig.6 shows a flow-chart of a process for updating the current address of a product in a global supply chain according to an embodiment. Step 601 includes sending an identification query by a reader. When RFID technology is used, the identification query is sent or emitted by a RFID reader at an entity of the global supply chain to query whether any products (with the RFID tag attached) has arrived. When a product has arrived at the entity, the identification code of the RFID tag is received by the RFID reader at Step 602. The identification code, such as the EPC, identifies the RFID tag, and hence, the product which the RFID tag is affixed onto.

Step 603 includes determining the home address corresponding to the identification code received by the reader. The home address may determined by looking up the mapping database which maps each identification code to the home address as already described earlier. Step 604 includes assigning a current address for the identification tag. The current address, which is the Care-of-Address according to the Mobile IPv6, represents the current location of the identification tag. Each entity of the global supply chain may have a set of IP addresses, such as IPv6 addresses, which are being reserved. Each of these reserved IP addresses identifies a specific entity. When the product arrives at the entity, one of the reserved IP addresses is assigned as the current address of the identification tag attached to the product. Accordingly, the physical location of the product can then be determined based on the assigned current address of the identification tag.

Step 605 includes sending the current address of the product to the home agent at the home address of the identification code. The home agent, upon receiving the current address, associates the current address with the corresponding home address of the identification code at Step 606. Accordingly, the home agent maintains a mapping of the identification code to home address, and of the home address to the current address of each identification tag. Therefore, it is possible to enquire the location of a product in the global supply chain by providing the identification code of the identification tag attached to the product.

Fig.7 shows a flow-chart of a process for obtaining the location of the product in the global supply chain according to an embodiment. Step 701 includes sending a request for the location of the product. The request contains the identification code, specifically the EPC, of the identification tag attached to the product. The request may be submitted by a user at any entities of the global supply chain. Since the entities of the global supply chain are connected via the Internet, the request may also be submitted by the user via any computer terminal which is connected to the Internet.

Step 702 includes determining the home address corresponding to the identification code. The determining of the home address of the identification code is similar to Step 603 of Fig.6. The corresponding home address of the identification code is determined from the mapping database of the identification code to home address at any of the entities of the global supply chain.

Step 703 includes sending the request to the home agent at the determined home address corresponding to the identification code. Step 704 includes determining a current address of the identification tag by the home agent. The current address of the identification tag is determined from the database maintained by the Home Agent which maps the home addresses of the identification tags to their corresponding current addresses. The determined current address of the identification tag is returned to the user at the entity or the computer terminal where the request was made.

In the event that an identification code or EPC cannot be found in the identification code to home address mapping database at an entity, the entity may perform one of the following:
- query upstream or downstream entities for the mapping;
- generate the home address if this operation is supported;
- assign a new address; or
- ignore the identification tag and permit a temporary black-out of its visibility until the product passes to the next entity.

It should be noted that IPv6 is used only as an example to illustrate the embodiments. Other network protocols, such as the Internet Protocol Version 4 (IPv4), may also be used in other embodiments. It is also possible that a combination of different network protocols is used. For example, the identification code may be mapped to a home address which is compliant to the IPv4 address format, and the IPv4 home address is subsequently mapped to the current address which is compliant to the IPv6 address format.

Although the present invention has been described in accordance with the embodiments as shown, one of ordinary skill in the art will readily recognize that there could be variations to the embodiments and those variations would be within the spirit and scope of the present invention. Accordingly, many modifications may be made by one of ordinary skill in the art without departing from the spirit and scope of the appended claims.

## Claims

1. A method for managing items distributed in a global supply chain, the method comprising:
sending an identification query to an identification tag attached to an item; receiving identification data from the identification tag;
determining a home address corresponding to the identification data; assigning a current address for the identification tag; sending the current address to a home agent at the determined home address; and
associating the current address with the home address by the home agent, such that the current address of the identification tag is returned in response to a request on the location of the identification tag.

2. A method for obtaining information on a location of an item distributed in a global supply chain, the method comprising:
sending a request containing identification data of an identification tag attached to the item; determining a home address corresponding to the identification data; sending the request to a home agent at the determined home address; determining a current address of the identification tag by the home agent, wherein
the current address of the identification tag is determined from a database which maps the home address of the identification tag to the current address; and
returning the current address of the identification tag.

3. The method of claim 1 or 2, wherein the identification data is a code which uniquely identifies the identification tag.

4. The method of claim 3, wherein the home address of the identification data is determined from a database which maps each code of the identification tag to a unique home address.

5. The method of claim 1, 2, 3 or 4, wherein the identification tag is a Radio Frequency Identification, RFID, tag. and the identification query is sent to the identification tag using radio frequency waves.

6. The method of any preceding claim, wherein the home address and the current address of the identification tag is compliant with the Internet Protocol version 6, IPv6, address format.

7. The method of any preceding claim, wherein the home agent maintains and updates a database which maps the home address of the identification tag to the current address.

8. The method of claim 7, wherein the home agent and the associating of the current address to the home address by the home agent are compliant with the Mobile Internet Protocol version 6, Mobile lPv6.

9. A unit of a global supply system comprising a plurality of units, the unit comprises:
a reader arranged to obtain identification data from an identification tag;
a network interface for connecting the unit to the other plurality of units of the global supply system; and
a middleware being adapted to perform at least one of the following:
assign a current address for the identification tag;
Load the current address to the network interface;
determine a home address based on the identification data of the identification tag;
send the current address to a home agent at the determined home address; and
issue a binding update to draw subsequent queries on the Identification tag to itself.

10. The unit of claim 9, wherein the identification data is a code which uniquely identifies the identification tag.

11. The unit of claim 10, wherein the middleware comprises a database which maps each code of the identification tag to a unique home address, and the home address of the identification tag is determined therefrom.

12. The unit of claim 9, 10 or 11, wherein the identification tag is a Radio Frequency Identification, RFID, tag. and the identification data is received by the reader using radio frequency waves.

13. The unit of claim 9, 10, 11, or 12, wherein the home address and the current address of the identification tag are compliant with the Internet Protocol version 6, IPv6, address format.

14. The unit of any of claims 9 to 13, further comprising a home agent. wherein the home agent receives current addresses of other identification tags from the other units of the global supply chain and associates them with their corresponding home addresses.

15. The method of claim 14, wherein the home agent and the associating of the current addresses of the other identification tags to their corresponding home addresses by the home agent arc compliant with the Mobile Internet Protocol version 6, Mobile IPv6.
